# DEMANDE DE BREVET EUROPEEN

(11) **EP 0 943 852 A1**
(43) Date de publication de la demande: **22.09.1999**
(21) Numéro de dépôt: 99440044.8
(22) Date de dépôt: 04.03.1999
(51) Int. Cl.: F16L 3/123

(54) **Procédé pour équiper un tube de raccordement métallique d'une patte de fixation**

(30) Priorité: 19.03.1998 FR 9803567
(71) Demandeur: Anoflex Société en nom collectif, 69300 Caluire (FR)
(72) Inventeur: Benz, Bernard, 69320 Saint Genis Laval (FR); Galoselva, Gilles, 69290 Craponne (FR)
(74) Mandataire: Rhein, Alain

(57) **Abrégé**

L'invention concerne un procédé pour équiper d'une patte de fixation (1) un tube (T) de raccordement métallique traité anticorrosion pour circuit de fluide hydraulique ou pneumatique, ladite patte de fixation (1) étant sertie sur ledit tube (T), d'une part, par enroulement, au moins partiel, autour de ce dernier d'une lame métallique (2) qui est apte à définir ladite patte de fixation (1) et, d'autre part, par déformation (3) partielle dudit tube (T).

Ce procédé est caractérisé en ce que :
- avant ou après conformation du tube (T) et avant sertissage de ladite patte de fixation (1), ledit tube (T) est traité anticorrosion, notamment au travers d'un traitement de surface approprié ;
- la déformation (3), due au sertissage, consiste à conférer au tube (T) au moins deux facettes ou méplats (5, 6) formant, entre eux, un angle (α) déterminé, ladite déformation (3) étant définie à même d'assurer l'immobilisation en rotation et en translation de la patte de fixation (1) le long du tube (T).

## Description

L'invention a trait à un procédé pour équiper d'une patte de fixation un tube de raccordement métallique traité anticorrosion pour circuit de fluide hydraulique ou pneumatique, en particulier pour véhicule automobile, de type direction assistée, climatisation ou autre.

De manière habituelle, de tels tubes de raccordement métalliques intervenant dans un circuit de fluide hydraulique ou pneumatique quelconque, en particulier d'un véhicule automobile, par exemple, dans un circuit de direction assisté ou encore de climatisation voire, dans un circuit de freinage ou autre, ont pour fonction de relier deux éléments dudit véhicule en venant s'adapter, pour autant, aux différentes contraintes rencontrées, par exemple, dans le compartiment moteur d'un tel véhicule. Ainsi, très fréquemment, ces tubes empruntent des formes complexes pour leur permettre d'assurer leur fonction tout en étant capable de contourner tel ou tel obstacle que représentent d'autres éléments que l'on retrouve à l'intérieur de ce compartiment moteur.

De plus, en venant conférer à ces tubes leur forme définitive, il convient encore de tenir compte de phénomènes tout aussi importants que sont les vibrations auxquelles ces tubes sont soumis en cours de fonctionnement dudit véhicule.

De tels tubes de circuit de fluide hydraulique ou pneumatique, notamment de véhicules automobiles, sont, en outre, soumis à des agents corrosifs à l'égard desquels il est indispensable d'assurer une protection ce qui se fait, usuellement, au travers d'un traitement de surface anticorrosion approprié de ces tubes.

Finalement, en raison de sa dimension ou encore en vue de compenser ces phénomènes vibratoires, il est assez usuel d'équiper un tel tube de raccordement métallique de pattes de fixation permettant de le rendre solidaire, par endroit, d'un autre élément du véhicule automobile ou encore de favoriser son orientation par rapport à un tel élément.

Jusqu'à présent, de telles pattes de fixation sont directement brasées sur le tube qui est, à ce moment là, non traité, c'est à dire qu'il est dépourvu de tout revêtement de protection anticorrosion.

De ce fait, on comprend bien que le traitement de surface anticorrosion de ces tubes ne peut intervenir qu'une fois ces opérations de brasage terminées. Il en résulte qu'un tel traitement de surface ne peut être mis en oeuvre en début de cycle de fabrication de ces tubes, ni même avant que ces derniers soient conformés, mais doit intervenir, plus particulièrement, en fin de cycle. Ceci complique beaucoup le procédé de fabrication à grande échelle de ce type de tube de raccordement métallique pour circuit hydraulique. En effet, on observera qu'il est assez difficile de manipuler, individuellement et de manière automatisée, des tubes souvent pliés dans de nombreuses directions dans le but d'assurer leur traitement, par exemple, par un procédé par électrolyse. Une telle manipulation est d'autant plus difficile que ces tubes viennent à être stockés, les uns par rapport aux autres et, de manière enchevêtrée, dans des caisses suite à une première étape de fabrication. Finalement, l'on conçoit, assez facilement, qu'il serait bien plus aisé d'assurer le traitement de ces tubes de raccordement métalliques le plus tôt possible en amont de leur ligne de fabrication.

A ce propos, il convient, toutefois, d'observer que pour atteindre un tel but il ne faut pas, pour autant, faire appel, pour l'équipement de pattes de fixation de tels tubes de raccordement métalliques, à des moyens de liaison qui, à leur tour, s'avéreraient particulièrement coûteux ou encore moins performants que la solution du brasage envisagée jusqu'à présent. Tout particulièrement, il convient d'observer qu'en venant braser sur un tel tube de raccordement métallique une patte de fixation, il est certain que la liaison ainsi obtenue est définitive et ne risque guère de se défaire en cours d'utilisation du véhicule automobile. A ce propos, on remarquera que, comparativement, une solution de type patte de fixation à collier de serrage par vis ou analogue est dans l'impossibilité de garantir les mêmes performances dans la mesure où un tel collier de serrage peut, à la longue, se défaire et autoriser une libre rotation du tube par rapport à sa patte de fixation.

De plus, l'on observera que la solution du collier de serrage présente l'inconvénient d'être d'un coût de revient supérieur à la solution classique du brasage.

L'on connaît encore, notamment au travers du brevet américain US-5.028.021, une patte de fixation adoptant la forme d'une lame métallique apte à être enroulée autour d'un tube dans lequel circule un fluide hydraulique ou pneumatique. Cette lame présente, en surface et de manière longitudinale, des nervures aptes à créer, lors de son enroulement autour dudit tube, une ou plusieurs empreintes se traduisant par une déformation partielle de ce dernier. On remarquera que ces déformations sont particulièrement localisées et adoptent, au niveau de ce tube, la forme de rainures ou d'encoches.

A ce propos, il convient d'observer que, dans le cas d'un tube revêtu d'une couche de protection anticorrosion, le sertissage de la lame exerce des contraintes particulièrement localisées sur ladite couche de protection qui subit, alors, au niveau des déformations du tube, des détériorations rendant ce dernier sujet aux agressions extérieures.

De plus, on remarquera que le maintien de cette lame sur ledit tube est assuré, après son enroulement autour de ce dernier, au travers de la coopération entre des moyens d'accrochage, équipant l'une des extrémités de ladite lame, et des moyens d'accrochage complémentaires équipant son autre extrémité. Ainsi, lors de la mise en place de ladite lame sur le tube, il s'agit de faire coopérer ces moyens d'accrochage ce qui est difficile à réaliser, par exemple, à l'intérieur du compartiment moteur d'un véhicule.

En fin de compte, la présente invention, au travers d'un procédé nouveau, est à même d'apporter une solution qui soit en mesure de répondre à l'ensemble des exigences précitées.

Ainsi, cette invention concerne un procédé pour équiper d'une patte de fixation un tube de raccordement métallique traité anticorrosion pour circuit de fluide hydraulique ou pneumatique, en particulier de véhicules automobiles, de type direction assistée, climatisation ou autre, ladite patte de fixation étant sertie sur ledit tube, d'une part, par enroulement, au moins partiel, autour de ce dernier d'une lame métallique qui est apte à définir ladite patte de fixation et, d'autre part, par déformation partielle dudit tube, caractérisé en ce que :
- avant ou après conformation du tube et avant sertissage de ladite patte de fixation, ledit tube est traité anticorrosion, notamment au travers d'un traitement de surface approprié ;
- la déformation du tube, due au sertissage, consiste à conférer à ce tube au moins deux facettes ou méplats formant, entre eux, un angle a déterminé, ladite déformation étant définie à même d'assurer l'immobilisation en rotation et en translation de la patte de fixation le long de ce tube.

Selon une autre caractéristique du procédé conforme à la présente invention, l'on choisit le matériau et/ou l'épaisseur de la patte de fixation de sorte que la lame métallique présente un retour élastique, après sertissage sur le tube, qui soit inférieur à celui du tube lui-même.

L'invention concerne, également, un tube de raccordement du type susmentionné, équipé d'une patte de fixation définie par une lame métallique, et obtenu au travers du procédé décrit ci dessus.

Tel que cela ressort de ce procédé, selon l'invention, la patte de fixation n'est plus brasée sur le tube mais est sertie autour de ce dernier de sorte que ce tube peut être traité anticorrosion avant qu'il ne soit équipé, précisément, d'une telle patte de fixation. Un tel sertissage peut alors intervenir au cours de l'une des dernières opérations de fabrication d'un tel tube de raccordement métallique pour circuit de fluide hydraulique ou pneumatique.

La présente invention sera mieux comprise à la lecture de la description qui va suivre se rapportant au dessin joint en annexe et dans lequel :
- la figure 1 correspond à une représentation schématisée et en perspective d'un tube de raccordement métallique équipé d'une patte de fixation selon le procédé conforme à l'invention ;
- la figure 2 est une vue en plan de ce tube et de sa patte de fixation tels qu'illustrés dans la figure 1 ;
- la figure 3 est une vue schématisée et en coupe selon III-III de la figure 2 ;
- les figures 4 à 6 illustrent, de manière schématisée, les différentes étapes intervenant au cours de l'opération de sertissage d'une patte de fixation sur un tube de raccordement métallique.

La présente invention concerne, plus particulièrement, le domaine des circuits de fluides hydrauliques ou pneumatiques, en particulier de véhicules automobiles, tels que les circuits de direction assistée, de climatisation, de freinage ou analogue.

Dans le cadre de tels circuits, interviennent, fréquemment, des tubes de raccordement métalliques destinés à assurer la liaison entre deux éléments quelconques de ce véhicule automobile. De tels tubes de raccordement métalliques sont conformés par rapport à un environnement déterminé et peuvent ainsi présenter des formes plus ou moins complexes tandis que leur longueur peut, dans certains cas, être relativement importante. Ceci étant, il convient alors de solidariser un tel tube, par endroit, à la structure du véhicule automobile ce qui se fait à l'aide de pattes de fixation 1 appropriées.

A ce propos, il convient d'observer que, dans certains cas, de telles pattes de fixation 1 n'ont pas simplement pour fonction de maintenir un tel tube de raccordement métallique T. En effet, de telles pattes de fixation 1 peuvent également êtres destinées à assurer l'orientation de ce tube de raccordement T par rapport à un autre élément, voire par rapport à un autre tube de raccordement ou analogue, ceci dans le but, notamment, de faciliter la connexion dudit tube T au niveau de ses extrémités.

A noter que ces tubes de raccordement métalliques T pour circuit de fluide hydraulique ou pneumatique sont, fréquemment, exposés à l'agression d'agents corrosifs, tout particulièrement lorsqu'ils prennent position dans le compartiment moteur d'un véhicule automobile. Pour pallier à une telle agression, ces tubes T sont amenés à subir un traitement anticorrosion sous forme, usuellement, d'un traitement de surface tel qu'un zincage, un bichromatage et/ou un revêtement synthétique.

A ce propos, selon l'invention, ce traitement anticorrosion intervient soit avant, soit après la conformation du tube mais, dans tous les cas, avant que celui-ci ne soit équipé d'une quelconque patte de fixation 1 sachant que, conformément au procédé selon l'invention, cette patte de fixation 1 est non pas brasée sur le tube, mais sertie sur ce dernier.

En fait, avantageusement, une telle patte de fixation 1 se présente, initialement, sous forme d'une lame 2 du type métallique apte à être sertie sur le tube T, d'une part, par enroulement, au moins partiel, autour de ce dernier et, d'autre part, par déformation 3 partielle dudit tube T. Cette déformation 3 est définie à même d'assurer l'immobilisation en rotation et en translation de ladite patte de fixation 1 le long de ce tube T.

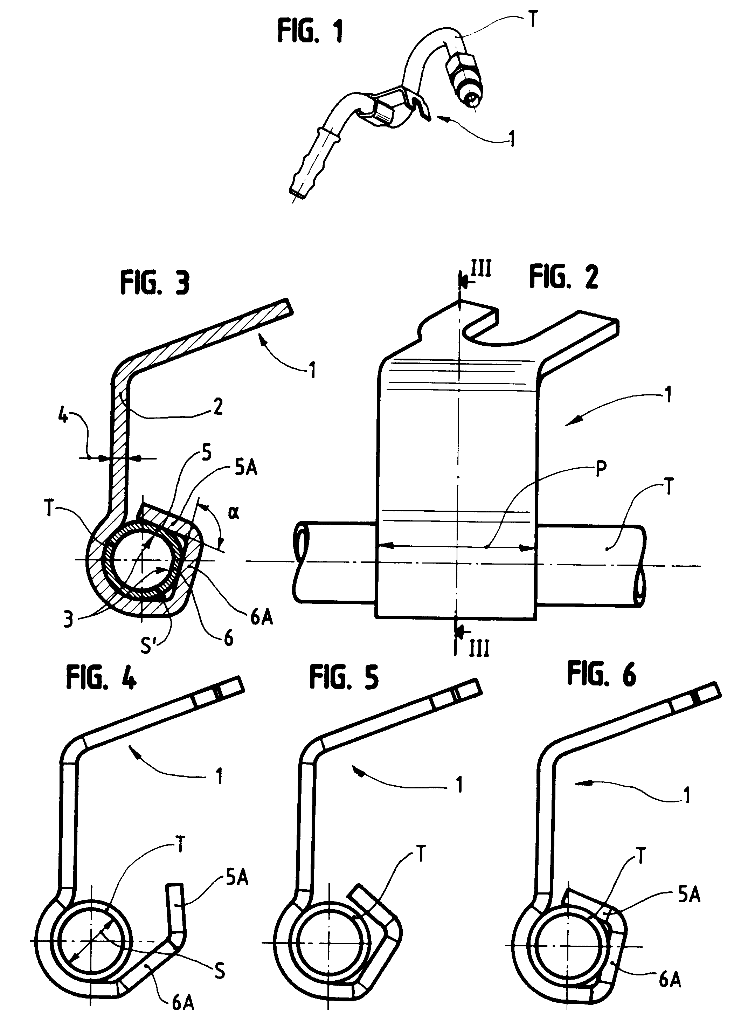

A noter que, préalablement à l'opération de sertissage, ladite lame métallique 2, prévue apte à définir la patte de fixation 1, peut être préconformée, tel que visible dans la figure 4, de manière à faciliter, ensuite, son enroulement autour du tube T.

On observera, de plus, que cette lame 2 est conçue de telle sorte que, après sertissage autour du tube T, son retour élastique soit inférieur à celui du tube T lui-même.

Dans ce but et selon un premier mode de réalisation, ladite patte de fixation 1 est, préférentiellement, conçue en un métal ou en un alliage métallique sensiblement identique à celui du tube T. Dans ce cas, ladite lame 2, destinée à définir cette patte de fixation 1, comporte une épaisseur 4 supérieure à celle de la paroi de ce tube T pour l'obtention d'un retour élastique de la lame métallique 2, après sertissage, qui soit inférieur à celui de ce tube T.

Une autre solution consiste à choisir, pour la patte de fixation 1, un matériau qui, par rapport à celui du tube T, soit apte à permettre un tel type de retour élastique.

Il est évident que l'on peut intervenir, à la fois, sur l'épaisseur 4 de ladite patte de fixation 1 et sur la nature du matériau dans lequel cette dernière est réalisée en vue d'optimiser le résultat escompté et d'obtenir un retour élastique apte à assurer une immobilisation parfaite.

Il est rappelé, en effet, à ce propos, que pour assurer l'immobilisation de cette patte de fixation 1 le long d'un tube T dont la section S est de révolution, il est conféré, lors de l'opération de sertissage et à l'endroit où s'effectue ce dernier, une déformation 3 à ce tube T de manière à lui conférer une section S', tel que visible dans la figure 3, qui ne soit plus de révolution. Ceci a pour conséquence, en effet, d'empêcher la rotation de cette patte de fixation 1 par rapport à ce tube T, une fois convenablement enroulée autour de ce dernier.

Quant à l'immobilisation en translation de ladite patte de fixation 1, elle résulte, précisément, en ce que la déformation 3 imprimée au tube T se limite à la portion P au niveau de laquelle vient s'enrouler la lame métallique 2 définissant ladite patte de fixation 1. Ceci peut être parfaitement géré dans la mesure où l'outil de déformation du tube T n'est autre que la lame métallique 2 correspondant à cette patte de fixation 1.

Selon un mode de réalisation préférentiel de l'invention, la déformation 3 plastique du tube T consiste à conférer à ce dernier, le long de la portion P, au moins deux facettes ou méplats 5, 6 formant entre eux un angle *a* déterminé, préférentiellement de l'ordre de 90°. Sur ces facettes ou méplats 5, 6 prennent appui deux facettes 5A, 6A de la lame métallique 2 obtenues par pliage de cette dernière. Ces facettes 5A, 6A sont également orientées l'une par rapport à l'autre selon un angle α et sont donc disposées à 90° environ.

Il est clair que la liaison ainsi obtenue entre une telle patte de fixation 1 et un tube 2 est irréversible, c'est à dire que cette liaison ne peut se défaire que moyennant une intervention volontaire d'un opérateur.

Aussi, la présente invention permet de réduire considérablement le risque qu'un tube T de raccordement métallique d'un circuit hydraulique quelconque ne soit plus maintenu par sa patte de fixation 1 en comparaison avec une solution consistant à braser ou encore à serrer par vissage la patte de fixation sur ledit tube.

Par ailleurs, il est tout aussi facile, en comparaison au brasage, d'assurer un parfait positionnement angulaire de cette patte de fixation 1 autour du tube T au cours de l'opération de sertissage.

En outre, un tel sertissage s'effectue au niveau d'au moins deux méplats qui ont pour avantage d'assurer une répartition des efforts d'écrasement au niveau du tube et, par conséquent, de la couche de traitement anticorrosion. Une telle répartition, contrairement à un écrasement localisé, permet, avantageusement, de préserver le traitement de surface dudit tube.

En conséquence, la présente invention vient répondre, avantageusement, au problème posé par l'état de la technique.

## Revendications

1. Procédé pour équiper d'une patte de fixation (1) un tube (T) de raccordement métallique traité anticorrosion pour circuit de fluide hydraulique ou pneumatique, en particulier de véhicules automobiles, de type direction assistée, climatisation ou autre, ladite patte de fixation (1) étant sertie sur ledit tube (T), d'une part, par enroulement, au moins partiel, autour de ce dernier d'une lame métallique (2) qui est apte à définir ladite patte de fixation (1) et, d'autre part, par déformation (3) partielle dudit tube (T), caractérisé en ce que :
- avant ou après conformation du tube (T) et avant sertissage de ladite patte de fixation (1), ledit tube (T) est traité anticorrosion, notamment au travers d'un traitement de surface approprié ;
- la déformation (3) du tube (T), due au sertissage, consiste à conférer à ce tube (T) au moins deux facettes ou méplats (5, 6) formant, entre eux, un angle (α) déterminé, ladite déformation (3) étant définie à même d'assurer l'immobilisation en rotation et en translation de la patte de fixation (1) le long de ce tube (T).

2. Procédé selon la revendication 1, caractérisé par le fait que, préalablement à l'opération de sertissage, ladite lame métallique (2) est préconformée de manière à faciliter ultérieurement son enroulement autour du tube (T).

3. Procédé selon l'une quelconque des revendications 1 ou 2, caractérisé par le fait que l'on choisit le matériau et/ou l'épaisseur (4) de la patte de fixation (1) de sorte que la lame métallique (2) présente un retour élastique, après sertissage sur le tube (T), qui soit inférieur à celui du tube (T) lui-même.

4. Procédé selon la revendication 3, caractérisé par le fait que ladite patte de fixation (1) est conçue en un métal ou en un alliage métallique sensiblement identique à celui du tube (T) et que ladite lame (2), destinée à définir cette patte de fixation (1), comporte une épaisseur (4) supérieure à celle de la paroi de ce tube (T) pour l'obtention d'un retour élastique de la lame métallique (2), après sertissage, qui soit inférieur à celui de ce tube (T).

5. Procédé selon l'une quelconque des revendications 3 ou 4, caractérisé par le fait que l'on choisit, pour la patte de fixation (1), un matériau qui, par rapport à celui du tube (T), soit apte à permettre un retour élastique, après sertissage sur le tube (T), qui soit inférieur à celui du tube (T) lui-même.

6. Procédé selon l'une quelconque des revendications précédentes, caractérisé par le fait qu'on limite la déformation (3) du tube (T) à une portion (P) de ce dernier au niveau de laquelle vient s'enrouler la lame métallique (2) lors du sertissage.

7. Procédé selon l'une quelconque des revendications précédentes, caractérisé par le fait que l'angle (α) entre les deux facettes ou méplats (5, 6) est de l'ordre de 90°.

8. Procédé selon l'une quelconque des revendications précédentes, caractérisé par le fait que, lors de la réalisation de la déformation (3), deux facettes (5A, 6A), obtenues par pliage de la lame métallique (2) et orientées l'une par rapport à l'autre selon un angle (α) déterminé, prennent appui sur les facettes ou méplats (5, 6) du tube (T).

9. Tube (T) de raccordement métallique traité anticorrosion pour circuit de fluide hydraulique ou pneumatique, en particulier de véhicules automobiles, de type direction assistée, climatisation ou autre, ledit tube (T) étant équipé d'une patte de fixation (1) sertie sur ledit tube (T), d'une part, par enroulement, au moins partiel, autour de ce dernier d'une lame métallique (2) qui est apte à définir ladite patte de fixation (1) et, d'autre part, par déformation (3) partielle dudit tube (T), caractérisé en ce que ce tube (T) est obtenu au travers d'un procédé selon l'une quelconque des revendications précédentes.
